**Europäisches Patentamt**

**European Patent Office**

**Office européen des brevets**

(11) Veröffentlichungsnummer: **0 305 768**
**A2**

(12) **EUROPÄISCHE PATENTANMELDUNG**

(21) Anmeldenummer: **88112826.8**

(22) Anmeldetag: **06.08.88**

(51) Int. Cl.⁴: **G01N 29/04**

(30) Priorität: **01.09.87 DE 3729142**
**24.12.87 DE 3744233**

(43) Veröffentlichungstag der Anmeldung:
**08.03.89 Patentblatt 89/10**

(84) Benannte Vertragsstaaten:
**DE FR GB IT SE**

(71) Anmelder: **Daimler-Benz Aktiengesellschaft**
**Postfach 600202 Mercedesstrasse 136**
**D-7000 Stuttgart 60(DE)**

(72) Erfinder: **Riechers, Daniel**
**Hohenzollernstrasse 78**
**D-7032 Sindelfingen(DE)**
Erfinder: **Krug, Martin**
**Wengertsteige 79**
**D-7038 Holzgerlingen(DE)**
Erfinder: **Moach, Manfred**
**Hochwaldstrasse 14**
**D-6750 Kaiserslautern(DE)**

(54) **Einrichtung zur Ermittlung von Feuchtigkeit im Bereich des Fahrzeugbodens eines Kraftfahrzeuges.**

(57) Es wird eine Einrichtung zur Ermittlung von Feuchtigkeit im Bereich des Fahrzeugbodens eines Kraftfahrzeuges beschrieben, wobei zwischen dem Fahrzeugboden und einem diesen auskleidenden wasserdichten Teppichbodenbelagformteil ein groß-flächiger Trägerkörper mit kapillarer Beschaffenheit angeordnet ist, welcher ein Paar drahtförmige Elektroden aufweist, welche einerseits sich über die Flä-che desselben ausdehnen und andererseits zwei An-schlußkontakte zur Verbindung mit einem Prüfgerät bilden.

*Fig. 3*

EP 0 305 768 A2

Einrichtung zur Ermittlung von Feuchtigkeit im Bereich des Fahrzeugbodens eines Kraftfahrzeuges

Die Erfindung betrifft eine Einrichtung zur Ermittlung von Feuchtigkeit gemäß dem Oberbegriff des Anspruches 1.

Es sind Inspektionsabläufe bekannt, wobei fertig ausgestattete Fahrzeuge einer Art Regenprobe unterzogen werden, um festzustellen, ob und wo Wasser im Bereich des Fahrzeugbodens ins Fahrzeug eindringt. Konzeptionsbedingt konnte in der Vergangenheit durch Entfernen eines nicht permanent eingebauten Teppichbodenbelagteiles diese Kontrolle per Augenschein vorgenommen werden. Nachdem nun zunehmend aus akustischen, rohbautechnischen und anderen Gründen die Bodenbeläge als Formteil fest eingebaut werden, entfällt diese recht einfache, jedoch aus Korrosionsgründen unerläßliche Kontrollmöglichkeit.

Aufgabe der Erfindung ist es daher, eine Einrichtung zu schaffen, mit welcher ohne Demontage von Teppichbodenbelagteilen Feuchtigkeit im Bereich des Fahrzeugbodens ermittelt werden kann.

Diese Aufgabe wird erfindungsgemäß mit den kennzeichnenden Merkmalen des Anspruches 1 gelöst, wobei die Merkmale der Unteransprüche vorteilhafte Ausgestaltungen und Weiterbildungen kennzeichnen.

Es ist zwar eine gattungsgemäße Einrichtung bekannt (DE-PS 504 359) - jedoch dient diese als elektrisches Hygrometer zur Messung des Feuchtigkeitsgehaltes sowohl in freier Luft und in Gasen als auch in Trocknungsräumen mit hohen Temperaturen - , bei welcher auf einen Rahmen ein Körper mit glasiger Oberfläche, z.B. ein Glaswollgewebe aufgebracht ist, in welchen zwei oder mehrere nebeneinanderlaufende elektrische Drähte eingebettet sind, welche wiederum an eine Spannungsquelle und ein Meßinstrument angeschlossen sind. Je nach dem Feuchtigkeitsgrad der Umgebung okkludiert Feuchtigkeit auf der Oberfläche des Glaswollgewebes, wodurch der Übergangswiderstand sich zwischen den als Elektroden dienenden Drähten ändert und eine entsprechende Anzeige am Meßinstrument erzeugt wird.

Ferner ist ein Sensor zur Ermittlung einer Kondensation von Wasserdampf auf einer freien Oberfläche bekannt (DE-PS 35 04 155), bei welchem ein Paar von Elektroden innerhalb einer elektrisch nicht leitenden Trägerfolie angeordnet ist, und die Enden der Elektroden unter Bildung einer Kontaktfläche zwischen sich aus der Trägerfolie austreten, wobei eine Widerstandsänderung der Kontaktfläche (naß oder trocken) in einer Schaltung zur Betätigung möglicher Stellglieder bzw. Steuerungen verwendet wird.

Beide bekannten Einrichtungen geben jedoch keinen Hinweis darauf, wie bei der erfindungsgemäßen Problematik eine großflächige Abfrage bezüglich eines möglichen Eindringens von Feuchtigkeit im Bereich des Fahrzeugbodens erzielt werden kann.

Ausführungsbeispiele der Erfindung sind in der Zeichnung dargestellt und werden im folgenden näher beschrieben. Es zeigt

Figur 1 in schematischer Darstellung einen Schnitt durch den Fahrzeugboden,

Figur 2 - 4 verschiedene Ausbildungen des in dem Trägerkörper angeordneten Elektrodenpaares,

Figur 5a u. 5b eine weitere Ausbildung des Trägerkörpers mit Elektrodenpaar und dessen Befestigung und

Figur 6 in schematischer Darstellung eine Schaltungsanordnung, in welche der Trägerkörper integriert ist.

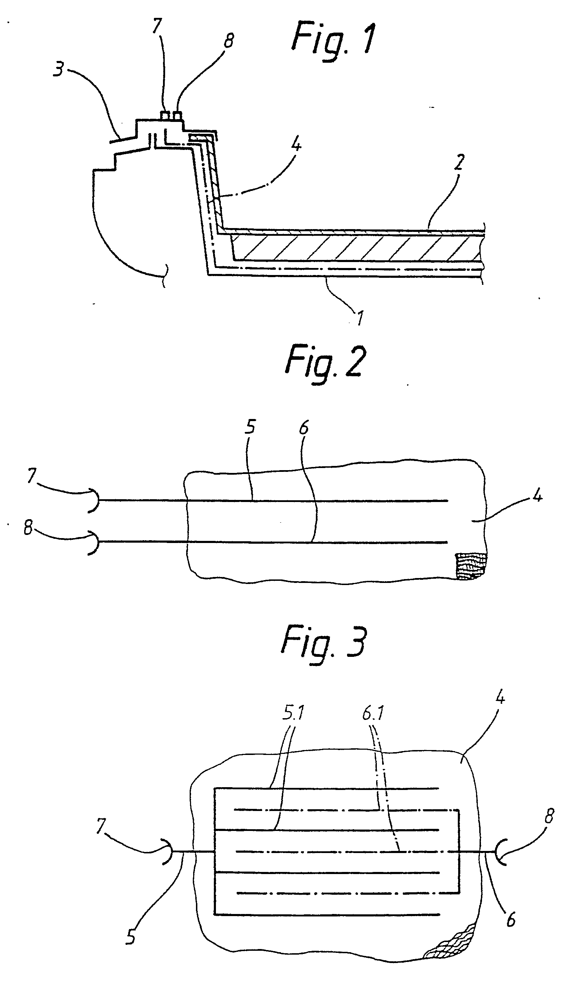

Wie Fig. 1 schematisch zeigt, ist der Fahrzeugboden 1 mit einem wasserdichten Teppichbodenbelagformteil 2 ausgekleidet, welches u.a. im Einstiegsbereich mit einer Einstiegschiene 3 gehalten ist. Zwischen dem Fahrzeugboden 1 und dem Teppichbodenbelagformteil 2 ist ein großflächiger, sich über den Fahrzeugboden - beispielsweise die Bodenwanne im Fahrerbereich - erstreckender Trägerkörper 4 angeordnet. Der Trägerkörper 4 besteht - wie die Figuren 2 bis 4 zeigen - aus einem elektrisch isolierenden, feuchtigkeitsempfindlichen Material mit kapilarer Beschaffenheit und ist mit einem Paar drahtförmiger, unter einem definierten Abstand zueinander angeordneten Elektroden 5, 6 versehen, welche einerseits sich über die Fläche des Trägerkörpers 4 ausdehnen und andererseits zwei Anschlußkontakte 7, 8 zur Verbindung mit einer Spannungsversorgungs- und Auswerteschaltung bilden.

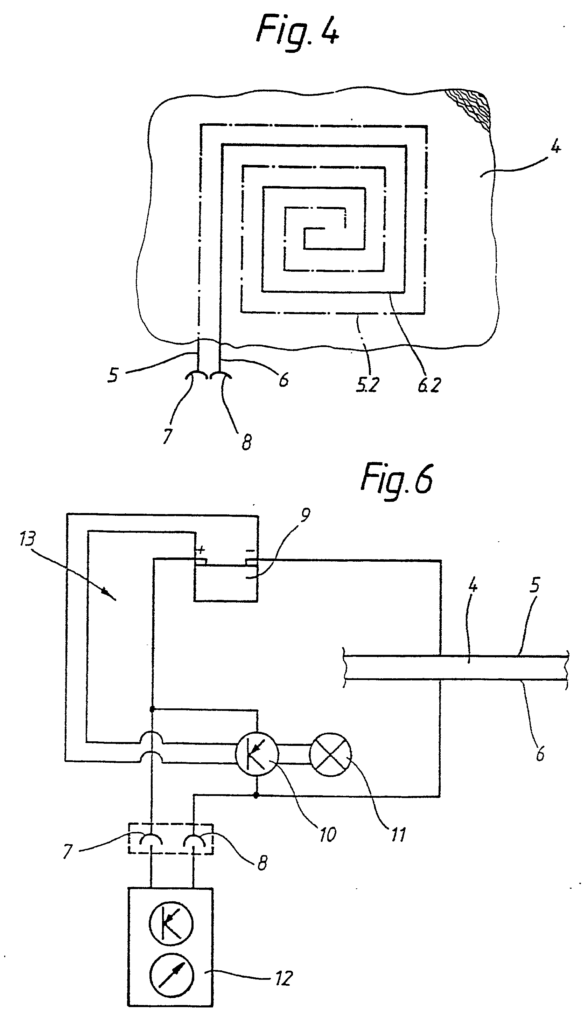

Die Geometrie der Elektroden 5, 6 wird hierbei im wesentlichen durch den großflächig zu erfassenden Fahrzeugbodenbereich bestimmt, wobei die Elektroden 5, 6 gemäß Figur 3 mit kammartig ineinandergreifenden Drahtteilen 5.1, 6.1 oder gemäß Figur 4 als ornamentartig verlegte Drahtteile 5.2, 6.2 ausgebildet sein können. Die Elektroden 5, 6 können hierbei auf den Träserkörper 4 aufgebracht sein, beispielsweise durch Verkleben, oder - in einer bevorzugten Art - mit in den Trägerkörper 4 eingewebt sein, während der Trägerkörper 4 wiederum entweder als loses Teil eingelegt wird oder am Schäumling des Teppichbodenbelagformteiles 2 an- oder eingeschäumt oder angeklebt sein kann.

Wie aus Figur 1 des weiteren ersichtlich ist, sind die Anschlußkontakte 7, 8 der Elektroden 5, 6 an einer leicht zugänglichen Stelle im Bereich des Fahrzeugbodens 1 angeordnet, so daß zu Kontrollzwecken in einfacher Weise ein Gleichstromprüfgerät angeschlossen werden kann, um so festzustellen, ob Wasser bzw. Feuchtigkeit im Bereich des Fahrzeugbodens ins Fahrzeug eingedrungen ist. Da im trockenen Zustand der elektrische Widerstand zwischen den beiden Elektroden 5, 6 sehr hoch ist, hingegen sich dieser Widerstand bei Feuchtigkeitsaufnahme des Trägerkörpers aufgrund seiner kapillaren Beschaffenheit stark ändert, kann am Prüfgerät ein Feuchtigkeitseinbruch abgelesen und gegebenenfalls optisch und/oder akustisch angezeigt werden.

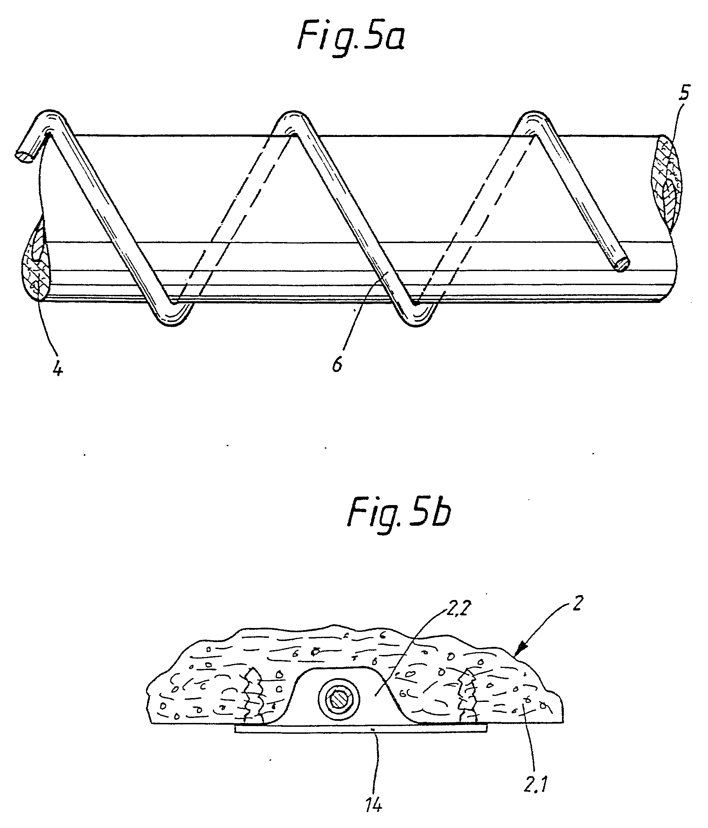

Wie aus Fig. 5a ersichtlich ist, kann der Trägerkörper 4 aber auch die eine Elektrode 5 nach Art einer Drahtisolation mantelförmig umgeben, auf welchen dann die andere Elektrode 6 wendelförmig gewickelt ist. Ein solcher Trägerkörper 4 mit seinen beiden Elektroden 5, 6 wird sodann großflächig mäanderförmig auf der Unterseite des Teppichbodenbelagformteiles 2 verlegt, beispielsweise in vorgesehenen Kanälen 2.2 des Schäumlings 2.1 des Formteiles 2 und mittels Halteelementen 14 befestigt - siehe Fig. 5b. Auch hierbei besteht der Trägerkörper 4 aus einem elektrisch isolierenden, feuchtigkeitsempfindlichen Material mit kapillarer Beschaffenheit, beispielsweise einem Vlies oder auch Papier. Während im trockenen Zustand des Trägerkörpers 4 der elektrische Widerstand zwischen der inneren Elektrode 5 und der äußeren Elektrode 6 sehr hoch ist, ändert sich dieser bei Feuchtigkeitsaufnahme des Trägerkörpers auf einen geringen Wert, so daß aufgrund der Widerstandsänderung ein Feuchtigkeitseinbruch festgestellt werden kann.

Wie weiters aus Figur 6 ersichtlich ist, kann der Trägerkörper 4 mit seinen Elektroden 5, 6 auch in einen Schaltkreis 13 integriert sein, welcher im wesentlichen die Fahrzeugbatterie 9, einen Verstärker 10 und eine Signalleuchte 11 umfaßt, mit dem Vorteil, daß bei Feuchtigkeitseinbruch die Signalleuchte 11 aufleuchtet. Eine derartige Anordnung bietet sich insbesondere bei Fahrzeugen an, die überwiegend in Naßgebieten verkehren. Wie zuvor beschrieben, kann auch bei dieser Anordnung zu Inspektionszwecken an die Anschlußkontakte 7, 8 ein Prüfgerät 12 angeschlossen werden.

Mit der erfindungsgemäßen Einrichtung werden also insbesondere folgende Vorteile erzielt:
- der Fahrzeugboden eines Kraftfahrzeuges kann großflächig auf einen eventuellen Feuchtigkeitseinbruch untersucht werden,
- ein eventueller Feuchtigkeitseinbruch ist aufgrund des feuchtigkeitsempfindlichen Trägerkörpers mit kapillarer Beschaffenheit auch noch nach längerer Zeit feststellbar,
- der Trägerkörper kann ohne nennenswerte Eisenschaftsänderung einer bestimmungsgemäßen Belastung standhalten,
- es ist eine einfache Herstellung und Montage gegeben.

**Ansprüche**

1. Einrichtung zur Ermittlung von Feuchtigkeit, welche einen aus elektrisch isolierendem und feuchtigkeitsempfindlichem Material bestehenden Trägerkörper aufweist, welcher ein Paar drahtförmige, unter einem definierten Abstand zueinander angeordnete Elektroden trägt, welche einerseits über die Fläche bzw. Länge desselben verlegt sind und andererseits zwei Anschlußkontakte zur Verbindung mit einer Spannungsversorgungs- und Auswerteschaltung bilden, **dadurch gekennzeichnet,** daß die Einrichtung großflächig zur Anordnung zwischen dem Fahrzeugboden und einem diesen auskleidenden wasserdichten Teppichbodenbelagformteil eines Kraftfahrzeuges ausgebildet ist und der Trägerkörper kapillare Beschaffenheit aufweist.

2. Einrichtung nach Anspruch 1 , **dadurch gekennzeichnet,** daß die drahtförmigen Elektroden (5, 6) in den Trägerkörper (4) eingebettet oder eingewebt sind.

3. Einrichtung nach Anspruch 1 , **dadurch gekennzeichnet,** daß die drahtförmigen Elektroden (5, 6) als parallele Drähte (5.2, 6.2) ornamentartig verlegt sind.

4. Einrichtung nach Anspruch 1 , **dadurch gekennzeichnet,** daß die drahtförmigen Elektroden (5, 6) kammartig ineinandergreifend (5.1, 6.1) verlegt sind.

5. Einrichtung nach Anspruch 1 , **dadurch gekennzeichnet,** daß der Trägerkörper (4) mit der Unterseite des Teppichbodenbelagformteils (2) verbunden ist.

6. Einrichtung nach Anspruch 1 , **dadurch gekennzeichnet,** daß der Trägerkörper (4) die eine Elektrode (5) nach Art einer Drahtisolation mantelförmig umgibt, auf welchen die andere Elektrode (6) wendelförmig gewickelt ist.

7. Einrichtung nach Anspruch 6 , **dadurch gekennzeichnet,** daß der Trägerkörper (4) mit seinen beiden Elektroden (5,6) großflächig mäanderförmig verlegt ist.

8. Einrichtung nach Anspruch 7 , **dadurch gekennzeichnet,** daß der Trägerkörper (4) mit seinen beiden Elektroden (5,6) an der Unterseite des Teppichbodenbelagformteils (2) mittels Halteelementen (14) befestigt ist. 9. Einrichtung nach Anspruch 1 , **dadurch gekennzeichnet,** daß die Elektroden (5,6) durch verzinnte Kupferleiter gebildet sind.

## Fig. 1

## Fig. 2

## Fig. 3

## Fig. 4

## Fig. 6

# Fig. 5a

# Fig. 5b